# FASCICULE DE BREVET EUROPEEN

(11) **EP 0 451 671 B1**
(45) Date de publication et mention de la délivrance du brevet: **02.02.1994**
(21) Numéro de dépôt: 91105205.8
(22) Date de dépôt: 02.04.1991
(51) Int. Cl.: A47J 37/04, F24C 15/16

(54) **Moyen de support d'une broche dans un four électrique combiné micro-ondes et résistance chauffante**
Stütze für einen Spiess in einem elektrischen Ofen mit Mikrowellen und Heizelementen
Means to support a spit in an electrical oven combined with micro-waves and heating resistance

(30) Priorité: 09.04.1990 FR 9004540
(43) Date de publication de la demande: 16.10.1991
(73) Titulaire: MOULINEX, F-93170 Bagnolet (FR)
(72) Inventeur: Chartrain, Pierre, F-14123 Cormeilles-le-Royal (FR); Gensbittel, Olivier Henri Jean-Louis, F-14123 Cormeilles-le-Royal (FR); Dubois, Daniel Fernand, F-14123 Cormeilles-le-Royal (FR)
(74) Mandataire: May, Hans Ulrich, Dr.

(56) Documents cités:
- DE-A- 1 679 001
- DE-A- 2 205 562
- DE-U- 8 701 917
- GB-A- 927 999
- US-A- 4 455 467

## Description

L'invention se rapporte à un moyen de support d'une broche destiné à être monté sur une lèchefrite d'un four électrique combiné micro-ondes et résistance chauffante, et comportant deux supports opposés qui sont isolés chacun, d'une part, de la broche par une bague isolante qui est traversée par la broche, et, d'autre part, de ladite lèchefrite par une base isolante comportant une tête qui est destinée à reposer sur un rebord de la lèchefrite, et au moins un pied de surface inférieure à celle de la face inférieure de la tête et destiné à traverser une ouverture correspondante de la lèchefrite avec un léger jeu périphérique.

Ce type de moyen de support a été décrit dans la demande de brevet européen no.91 10 0195.6 (EP 0 438 072 A1) déposée le 08.01.91 et revendiquant la priorité de la demande de brevet français n° 9000235 déposée par la demanderesse le 10.1.90, et citée conformément à l'Art. 54(3) CBE. Cette demande concerne un four de type comprenant, dans une cavité limitée par des parois et une porte, une lèchefrite équipée d'un tel moyen de support recevant une broche et pouvant occuper deux positions, soit une position de cuisson pour laquelle la lèchefrite est à l'intérieur de la cavité et la broche est amenée dans l'axe d'un entraîneur rotatif monté sur l'une des parois, soit une position de retrait pour laquelle la lèchefrite est au moins partiellement à l'extérieur de la cavité et la broche est libérée de l'entraîneur.

L'inconvénient des moyens de support utilisés est leur tendance au déchaussement. En effet, si on fait cuire par exemple un gros canard à la broche, les pattes du canard peuvent soit frotter contre les parois, soit se coincer dans un support, ce qui provoque le basculement de la broche hors de sa position normale. Cela se traduit par un pivotement de la base isolante qui sort des ouvertures et qui, dans certains cas, risque de se briser, puis par la chute des moyens de support et de la broche.

L'invention a pour but de remédier à cet inconvénient en évitant la chute et la rupture des moyens de support.

Selon l'invention, chaque ouverture comportant un bord tombant constituant une jupe, la hauteur et la section horizontale du pied sont dimensionnées en fonction de la section horizontale de l'ouverture de manière que, lors d'un basculement du moyen de support autour d'un axe horizontal par appui d'une partie périphérique de la tête sur le rebord de la lèchefrite, une région du pied opposée audit axe vienne en appui contre la jupe, empêchant ainsi le pied de sortir de l'ouverture.

Ainsi, grâce à l'arc-boutement du pied contre la jupe, on évite lors d'un basculement que le pied ne sorte complètement des ouvertures. Le basculement limité supprime les risques de rupture. Cette solution est particulièrement avantageuse car elle évite d'ajouter une pièce supplémentaire destinée à maintenir la base contre la lèchefrite, elle est donc économique et bien adaptée à la fabrication en grande série.

Les caractéristiques et avantages de l'invention ressortiront d'ailleurs de la description qui va suivre, à titre d'exemple, en référence au dessin annexé dans lequel :

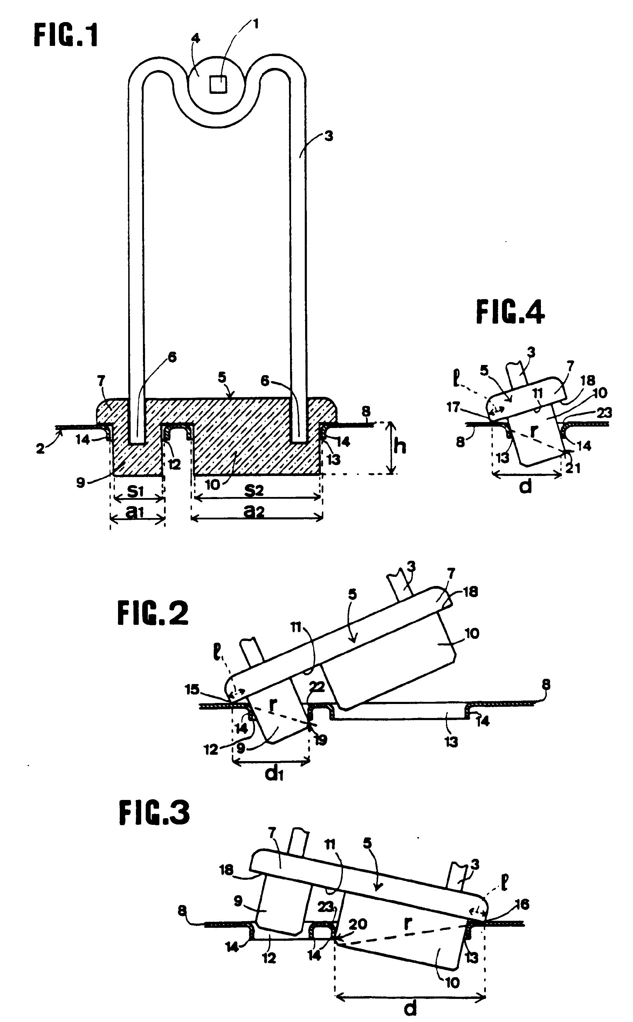

La figure 1 est une vue en coupe transversale à la broche d'un moyen de support, selon l'invention, monté dans les ouvertures de la lèchefrite ; la figure 2 représente en élevation la base isolante montée dans les ouvertures de la lèchefrite et dans une position basculée transversalement vers la gauche ; la figure 3 est une vue analogue à la figure 2 illustrant un basculement transversal vers la droite ; la figure 4 est une vue axiale en élevation de la base isolante dans une position basculée axialement.

Le moyen de support d'une broche 1 représenté sur la figure 1 est destiné à être monté sur une lèchefrite 2 d'un four électrique combiné micro-ondes et résistance chauffante (non représenté). La lèchefrite 2, telle que décrite dans la demande de brevet n° 9000235 déposée par la demanderesse le 10.01.90, vient occuper une position de cuisson à l'intérieur de la cavité du four (non représentée), pour laquelle la broche 1 est dans l'axe d'un entraîneur rotatif (non représenté) monté sur une paroi de la cavité.

Le moyen de support comporte deux supports métalliques opposés 3 en forme de U qui sont isolés chacun, d'une part, de la broche 1 par une bague isolante 4 en céramique qui est traversée par la broche 1, et, d'autre part, de ladite lèchefrite 2 par une base isolante 5. Chaque support 3 est fixé à la base 5 par cimentage de l'extrémité 6 de ses branches. Chaque base isolante 5 comporte une tête 7 qui est destinée à reposer sur un rebord 8 de la lèchefrite 2, et deux pieds 9,10 de section horizontale totale inférieure à celle de la face inférieure 11 de la tête 7 et destinés à traverser chacun une ouverture correspondante 12,13 pratiquée dans le rebord 8 de la lèchefrite 2 avec un léger jeu périphérique. La base isolante 5 est réalisée de préférence d'une seule pièce en un matériau céramique du type stéatite qui est transparente aux micro-ondes.

Selon l'invention, et comme on le voit mieux sur la figures 2,3 et 4 chaque ouverture 12,13 comportant un bord tombant 14 constituant une jupe, la hauteur h et la section horizontale s1,s2 de chaque pied 9,10 sont dimensionnées en fonction de la section horizontale a1,a2 de l'ouverture correspondante 12,13 de manière que, lors d'un basculement du moyen de support autour d'un axe horizontal 15,16,17 par appui d'une partie périphérique 18 de la tête 7 sur le rebord 8 de la lèchefrite 2, une région 19-20-21 du pied correspondant 9-10 opposée audit axe 15-16-17 vienne en appui contre la jupe 14, empêchant ainsi ledit pied 9,10 de sortir de son ouverture 12,13. Ledit axe 15,16,17 est matérialisé par la ligne de contact entre le rebord 8 de la lèchefrite et la partie périphérique 18 de la tête.

Le basculement peut-être provoqué par exemple par frottement ou accrochage de la pièce embrochée sur les parois de la cavité ou sur les supports 3. Le basculement peut être transversal à l'axe de la broche 1 (figure 2 et 3) ou axial à la broche 1 (figure 4).

Comme on le comprendra, le basculement est limité, du fait que les dimensions de chaque pied 9-10 sont telles que le rayon de basculement r qui est égal à la distance de l'axe de basculement 15-16-17 à la région 19-20-21 du pied 9-10 la plus éloignée de l'axe 15-16-17 est supérieure à la distance d entre ledit axe 15-16-17 et le bord supérieur 22 de l'ouverture 12-13 opposé à l'axe 15-16-17. Le rayon de basculement r dépend des hauteur h et section s1-s2 du pied 9-10 et de la distance l entre l'axe 15-16-17 et le pied 9-10.

La stéatite étant un matériau particulièrement onéreux on ne peut pas trop augmenter la hauteur h ou la section s1,s2 des pieds. En choisissant un rayon de courbure r juste supérieur à la distance d entre l'axe 15,16,17 et le bord supérieur 22,23 de l'ouverture 12,13, on trouve un compromis idéal entre la hauteur h et la section s1,s2 des pieds 9,10. La pièce garde ainsi une taille et un prix raisonnable.

La base isolante 5 du premier support 3 comporte deux pieds espacés 9,10 de tailles différentes (figures 1 à 4), tandis que la base isolante du deuxième support (non représenté) comporte deux pieds espacés de taille identique, de manière à éviter l'interchangeabilité des moyens de support au moment de la mise en place par l'utilisateur.

Il faut dans les deux cas que les pieds 9,10 aient chacun une section s1,s2 suffisamment grande pour supporter les efforts en particulier dans le cas d'un basculement axial où les risques de voir se briser les pieds 9,10 sont plus importants. A cet effet, on choisit de préférence une section oblongue pour au moins un pied.

Les essais ont montrés qu'une base isolante 5 ayant les dimensions suivantes convient particulièrement pour les pieds de tailles différentes :
hauteur des pieds : h = 1,2 cm
distance entre axe de basculement et pied : 1 = 0,4 cm
largeur des pieds : 1,2 cm
longueurs respectives des pieds : 1,2 cm et 3,2 cm
longueurs respectives des ouvertures : 1,23 cm et 3,24 cm
Largeur des ouvertures = 1,23 cm
hauteur de la jupe : de 0,3 à 0,6 cm

## Revendications

1. Moyen de support d'une broche (1) monté d'une facon amovible sur une lèchefrite (2) d'un four électrique combiné micro-ondes et résistance chauffante, et comportant deux supports (3) opposés qui sont isolés chacun, d'une part, de la broche (1) par une bague isolante (4) qui est traversée par la broche (1), et, d'autre part, de ladite lèchefrite (2) par une base isolante (5) comportant une tête (7) qui est destinée à reposer sur un rebord (8) de la lèchefrite (2), et au moins un pied (9,10) de section horizontale (s1,s2) inférieure à celle de la face inférieure (11) de la tête (7) et destiné à traverser une ouverture correspondante (12,13) de la lèchefrite (2) avec un léger jeu périphérique,
chaque ouverture (12,13) comportant un bord tombant (14) constituant une jupe, la hauteur (h) et la section horizontale (s1, s2) du pied (9,10) étant dimensionnées en fonction de la section horizontale (a1,a2) de l'ouverture (12,13) de maniére que, lors d'un basculement du moyen de support autour d'un axe horizontal (15,16,17) par appui d'une partie périphérique (18) de la tête (7) sur le rebord (8) de la lèchefrite (2), une région (19-20-21) du pied (9-10) opposée audit axe (15-16-17) vienne en appui contre la jupe (14), empêchant ainsi le pied (9,10) de sortir de l'ouverture (12,13).

2. Moyen de support selon la revendication 1,
**caractérisé en ce que** les dimensions du pied (9-10) sont telles que, le rayon de basculement (r) qui est égal à la distance de l'axe de basculement (15-16-17) à la région (19-20-21) du pied (9-10) la plus éloignée de l'axe (15-16-17) est supérieure à la distance (d) entre ledit axe (15-16-17) et le bord supérieur (22-23) de l'ouverture (12-13) opposé à l'axe (15-16-17).

3. Moyen de support selon la revendication 1 ou 2,
**caractérisé en que** la base isolante (5) du premier support (3) comporte deux pieds (9,10) de tailles différentes, tandis que la base isolante du deuxième support comporte deux pieds de taille identique, de manière à éviter l'interchangeabilité des moyens de support au moment de la mise en place.

4. Moyen de support selon la revendication 1 ou 2,
**caractérisé en que** la base isolante (5) est réalisée d'une seule pièce en un matériau céramique du type stéatite.

## Patentansprüche

1. Stützvorrichtung für einen Spieß (1), die abnehmbar auf einer Tropfschale (2) eines elektrischen Ofens mit Heizelementen und integrierter Mikrowelle gehalten ist und zwei gegenüberliegende Halter (3) aufweist, die jeder einerseits gegenüber dem Spieß (1) durch eine vom Spieß (1) durchsetzte isolierende Ringscheibe (4) und andererseits gegenüber der Tropfschale (2) durch eine isolierende Basis (5) isoliert sind, die einen Kopf (7), der zur Auflage auf einem Randanschlag (8) der Tropfschale (2) bestimmt ist, und mindestens einen Fuß (9, 10) mit einem geringeren horizontalen Querschnitt (s1, s2) als der Querschnitt der Unterseite (11) des Kopfes (7), der zum Durchtritt durch eine entsprechende Öffnung (12, 13) der Tropfschale (2) mit einem geringen Umfangsspiel bestimmt ist, aufweist, wobei jede Öffnung (12, 13) einen eine Schürze bildenden heruntergezogenen Rand (14) aufweist und die Höhe (h) und der horizontale Querschitt (s1, s2) des Fußes (9, 10) in Abhängigkeit vom horizontalen Querschnitt (a1, a2) der Öffnung (12, 13) so bemessen sind, daß bei einem Kippen der Stützvorrichtung um eine horizontale Achse (15, 16, 17) durch Abstützung eines Umrißteils (18) des Kopfes (7) auf dem Randanschlag (8) der Tropfschale (2) ein der Achse (15-16-17) gegenüberliegender Bereich (19-20-21) des Fußes (9-10) in Anschlag gegen die Schürze (14) kommt, wodurch der Austritt des Fußes (9, 10) aus der Öffnung (12, 13) verhindert wird.

2. Stützvorrichtung nach Anspruch 1, **dadurch gekennzeichnet,** daß die Abmessungen des Fußes (9-10) so sind, daß der Kippradius (r), der gleich dem Abstand der Kippachse (15-16-17) zum von der Achse (15-16-17) am weitesten entfernten Bereich (19-20-21) des Fußes (9-10) ist, größer als der Abstand (d) zwischen der Achse (15-16-17) und dem der Achse (15-16-17) gegenüberliegenden oberen Rand (22-23) der Öffnung (12-13) ist.

3. Stützvorrichtung nach Anspruch 1 oder 2, **dadurch gekenn****zeichnet,** daß die isolierende Basis (5) des ersten Halters (3) zwei Füße (9, 10) von verschiedener Größe, dagegen die isolierende Basis des zweiten Halters zwei Füße von gleicher Größe aufweist, um die Austauschbarkeit der Stützvorrichtungen beim Einsetzen zu verhindern.

4. Stützvorrichtung nach Anspruch 1 oder 2, **dadurch gekenzeich****net,** daß die isolierende Basis (5) in einem Stück aus einem Keramikmaterial vom Typ Steatit hergestellt ist.

## Claims

1. Support means for a spit (1) mounted removably on a dripping pan (2) of a combined microwave/heating-element electric oven, and comprising two opposed supports (3) which are each insulated, on the one hand, from the spit (1) by an insulating ring (4) through which the spit (1) passes and, on the other hand, from the said dripping pan (2) by an insulating base (5) comprising a head (7) which is intended to rest on an edge (8) of the dripping pan (2), and at least one foot (9, 10) with a horizontal cross section (s1, s2) less than that of the bottom face (11) of the head (7) and intended to pass through a corresponding opening (12, 13) in the dripping pan (2) with slight peripheral clearance, each opening (12, 13) having a side (14) that slopes downwards forming a skirt, the height (h) and horizontal cross section (s1,s2) of the foot (9, 10) being dimensioned in accordance with the horizontal cross section (a1,a2) of the opening (12, 13) in such a way that, when the support means tilts about a horizontal axis (15, 16, 17) by support being given to a peripheral part (18) of the head (17) on the edge (8) of the dripping pan (2), an area (19-20-21) of the foot (9-10) opposite the said axis (15-16-17) comes up against the skirt (14) thus preventing the foot (9, 10) from coming out of the opening (12, 13).

2. Support means according to Claim 1, characterised in that the dimensions of the foot (9-10) are such that the radius of tilting (r), which is equal to the distance from the tilt axis (15-16-17) to the area (19-20-21) of the foot (9-10) furthest from the axis (15-16-17), is greater than the distance (d) between the said axis (15-16-17) and the top edge (22-23) of the opening (12-13) opposite to the axis (15-16-17).

3. Support means according to Claim 1 or 2, characterised in that the insulating base (5) of the first support (3) has two feet (9, 10) of different sizes, whilst the insulating base of the second support has two feet of identical size, so as to prevent the support means from being interchangeable when they are fitted.

4. Support means according to Claim 1 or 2, characterised in that the insulating base (5) is produced in one piece from a ceramic material of the steatite type.
